(19) Europäisches Patentamt
European Patent Office
Office européen des brevets

(11) **EP 1 777 116 A1**

(12) **EUROPEAN PATENT APPLICATION**

(43) Date of publication:
25.04.2007 Bulletin 2007/17

(51) Int Cl.:
*B60R 16/02* (2006.01)    *H02J 7/14* (2006.01)

(21) Application number: 05425732.4

(22) Date of filing: 19.10.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **C.R.F. SOCIETA' CONSORTILE PER AZIONI**
10043 Orbassano (Torino) (IT)

(72) Inventor: **Idone, Domenico**
10043 - Orbassano (Torino) (IT)

(74) Representative: **Quinterno, Giuseppe et al**
Jacobacci & Partners S.p.A.
Corso Emilia, 8
10152 Torino (IT)

(54) **A system for managing the supply of electrical energy in a motor vehicle**

(57)     The system comprises:
an electrical generator (1) which can be driven by the motor vehicle's engine and with which there is associated a voltage regulator device (2),
one (at least) electrical storage battery (3) connected to the generator (1) and intended to be recharged with the energy that the generator (1) produces in excess, as compared with the consumption of the loads (5', 6), and intended to supply energy to the loads (5, 6) when the energy produced by the generator (1) is insufficient,
a management unit (4) for the storage battery (3) able to control the flow of energy from the generator (1) to the battery (3),
controlled electrical switches (7) able to selectively control the connections of the non-priority loads (5) with the generator (1) and with the battery (3),
a plurality of sensors (S1, ..., SN) able to supply signals or data indicating values or states of a plurality of parameters related to the operation of the motor vehicle,
a detector (Sm+1) able to supply signals or data (SOC) indicating the state of charge of the battery (3), and
a processing and control unit (PCU) arranged to generate, according to predetermined procedures based on the current operating condition (M) of the motor vehicle and on the state of charge (SOC) of the battery (3), control signals for the voltage regulator (2) associated with the generator (1), the management means (4) for the battery (3) and the controlled switches (7), in such a way that the supply of energy to at least one non-priority electrical load (5) is capable of being reduced and/or delayed or interrupted when the motor vehicle is in a predetermined operating condition (M) and the battery (3) is in a predetermined state of charge (SOC).

FIG.1

**Description**

The present invention relates to a system for managing the supply of electrical energy to electrical/electronic user devices or loads installed in a motor vehicle.

More specifically, a subject of the invention is an electrical energy supply system of the type defined in the introductory part of Claim 1, for supplying predetermined non-priority user devices and predetermined priority user devices, to which the supply of energy may and may not, respectively, be reduced and/or delayed or interrupted.

In conventional motor vehicles that are currently in production, the electrical energy required for the on-board electrical/electronic user devices is produced by a generator (typically a three-phase alternator to which there is connected a rectifier) driven by the motor vehicle's engine, and is then stored and supplied by one (at least) electrical storage battery, and absorbed by the various on-board user devices or loads in operation.

Naturally, the amount of energy that can be generated on board a motor vehicle is limited and depends on the instantaneous speed of rotation of the motor-vehicle's engine.

In operation, various conditions may therefore arise in which the amount of energy that can be generated on board is less than the amount of energy that is required by the user devices; in such situations, the "lacking" amount of energy is obtained from the storage battery, the charge of which is correspondingly reduced. If the storage battery is completely discharged, all of the on-board user systems cease to operate.

The growing presence of on-board electrical/electronic devices and the trend towards their increasing power involve a significant increase in energy requirements, in particular the electrical power required, against however the not-so-rapid increase in power that can be generated on board. The latter trend is, effectively, drastically reducing the energy margins.

An object of the present invention is to provide a system for managing the electrical energy on board a motor vehicle, resulting in improving the on-board generation and distribution of energy, and in particular in avoiding and/or being able to manage operational situations in which an energy surplus or deficit arises.

This and other objects are achieved in accordance with the invention using a system, the main features of which are defined in the appended Claim 1.

Other advantages and features of the invention will become clear from the following detailed description which is given purely by way of non-limiting example and with reference to the appended drawings in which:

Figure 1 is a block diagram of a system according to the invention,
Figure 2 is a block diagram showing an architecture of an electronic control unit included in the system of Figure 1, and
Figure 3 is an orthogonal Cartesian diagram showing an example pattern of the energy E that can be supplied to a non-priority load in a system according to the invention as a function of time t indicated on the abscissa.

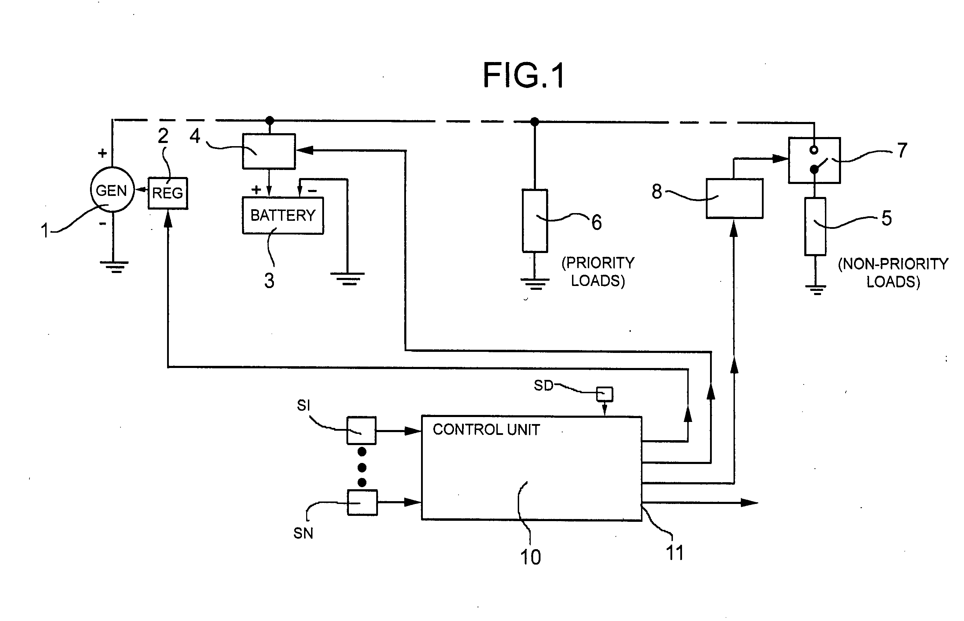

With reference to Figure 1, a system for the supply of electrical energy on board a motor vehicle according to the invention comprises an electrical generator 1 (alternator with rectifier) that can be driven by the internal combustion engine (not represented) of the motor vehicle.

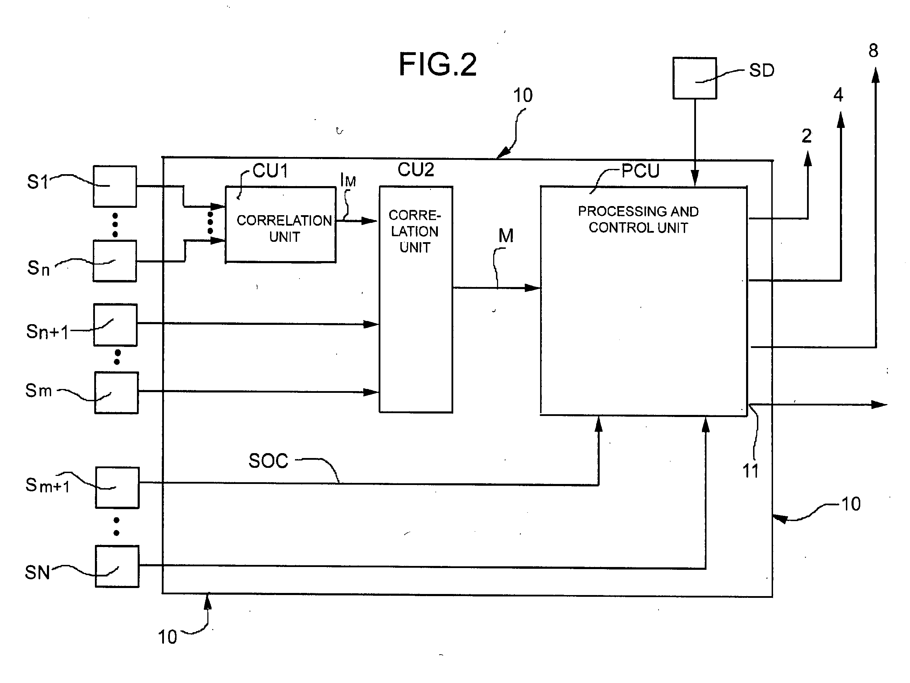

With the generator 1 there is associated a voltage regulator 2, of a type likewise known per se, driven during operation by an electronic control unit labelled 10 in Figures 1 and 2.

The energy supply system also comprises one (at least) electrical storage battery 3, the connection of which to the electrical generator 1 is controlled by a unit 4 for managing its state of charge.

The management unit 4 may comprise, for example, a controlled DC/DC converter, operatively driven by the electronic control unit 10.

Electrical/electronic user devices or loads installed on board a motor vehicle can be operatively connected to the generator 1 and to the storage battery 3. Such devices comprise a plurality of "normal", that is non-priority, electrical loads represented generally in Figure 1 by a generic load labelled 5, and a plurality of priority loads, represented generally by a generic load labelled 6.

In the present description, and in the claims that follow, non-priority electrical user devices or loads are understood to be those devices or loads to which the supply of electrical energy can be reduced and/or delayed or interrupted, without this having a detrimental effect on the functions that are essential for the safe driving of the motor vehicle.

On the other hand, priority loads are understood to be those devices to which the supply of electrical energy absolutely may not be interrupted or reduced, or delayed. This second group of loads includes, for example, the electrical/electronic devices forming parts of by-wire steering and/or braking systems, or of other by-wire systems the functionalities of which are essential for the safe driving of the motor vehicle, and the systems for controlling the engine and other units or functions that are vital for the motor vehicle, etc..

Non-priority loads can be connected to the on-board generation equipment (equipment generally comprising the generator 1 and the storage battery 3) via associated controlled electrical switches 7, of which only one is indicated diagrammatically in Figure 1. Such switches may be electrical interrupters (on-off type switches) that are preferably solid state interrupters of the static type, or controlled switches able to bring about a continual variation in the current supplied to the associated loads during operation.

The switches 7 are controlled by an associated electronic management unit 8, which in turn is driven by the main electronic control unit 10.

As shown in Figures 1 and 2, a plurality of sensor or detector devices labelled S1 to SN is connected to the electronic control unit 10.

With reference to Figure 2, a first group S1-Sn of such sensors is connected to corresponding inputs of a first correlation unit labelled CU1 in Figure 2. The sensors S1 to Sn supply the unit CU1 signals or data indicating the values or states of a plurality of operating parameters for the motor vehicle, such as the forward movement speed of the motor vehicle, the activated or non-activated condition of the motor vehicle's braking system, the rotation angle of the steering wheel and/or the transverse acceleration of the motor vehicle, the position of the accelerator pedal, the rotation speed or number of revolutions per unit of time of the motor vehicle's internal combustion engine, and signals indicating the gear ratio implemented by the gearbox of the motor vehicle.

The correlation unit CU1 is arranged in a known manner per se to calculate, based on information from the sensors S1-Sn, the values of some quantities or parameters that are used subsequently in the control unit 10. In one non-limiting embodiment, the unit CU1 is arranged to calculate, for example, the following quantities:

the average speed $\overline{V}$ of the motor vehicle,
the average time $\overline{t}_b$ of operation of the braking system
per kilometre travelled by the motor vehicle, and
the average transverse acceleration $\overline{a}_y$ of the motor vehicle.

Based on the calculated values of the abovementioned quantities, the unit CU1 is arranged to determine or estimate, according to predetermined procedures, the value of a predefined index $I_M$ able to identify the type of journey or mission of the motor vehicle, from a plurality of predefined types of journey or mission. The types of journey or mission may, for example, be the following:

- in-town journeys,
- hill/mountain journeys, and
- extra-urban journeys.

One way of determining values of the index $I_M$ is disclosed, for example, in the previous European patent application EP-A-0 950 839 in the name of the same Applicant.

The signals or data representing the value determined for the index $I_M$ are supplied to the input of a second correlation unit CU2 (electrical correlation).

To this unit CU2 there is connected a further plurality of sensors Sn+1-Sm that supply it signals or data indicating the values or states of a further plurality of operating parameters for the electrical system of the motor vehicle (currents, voltages, temperatures).

The correlation unit CU2 is arranged to calculate, based on information from these sensors, the values of some electrical parameters or quantities that are used subsequently in the control unit 10. The unit CU2 is arranged to calculate, for example, the following quantities:

- the maximum instantaneous power that can be delivered by the alternator,
- the ratio between the instantaneous and maximum absorption of the electrical loads.

Based on the signals or data supplied by the sensors Sn+1, ..., Sm and on the value of the index $I_M$ identifying the current type of journey or mission of the motor vehicle, the correlation unit CU2 supplies at its output signals or data indicating the value of an index M identifying the current operating condition or mode of the motor vehicle, from a plurality of predefined operating conditions or modes such as drive mode (normal running), park mode (when parked), crank request mode (startup request), logistic mode (when parked for extended periods), limp home mode (recovery when the vehicle is partially broken down), etc.

The signals or data M indicating the current operating mode of the motor vehicle reach a processing and control unit labelled PCU in Figure 2.

Further sensors Sm+1 ... SN are connected to the unit PCU, one of which (Sm+1) supplies, in particular, signals or data indicating the state of charge SOC of the battery 3.

Based on the current operating mode M of the motor vehicle and on the signals supplied by the sensors Sm+1, ..., SN, the processing and control unit PCU generates control signals for the voltage regulator 2 associated with the generator 1, the management unit 4 associated with the battery 3 and the unit 8 for driving the switches associated with the non-priority loads 5.

The processing and control unit PCU has another output, labelled 11 in Figure 2, which is intended to be connected to an electronic control unit of the motor vehicle's internal combustion engine. Through this connection, the unit PCU is able to send to the engine's electronic control unit signals aimed at obtaining an increase in the number of revolutions per unit of time for the internal combustion engine when idling, when it is necessary to increase the supply by the generator 1 and 2 to reduce the absorption of current that is dependent on the battery 3.

During operation, the unit PCU executes, based on the current operating condition M of the motor vehicle, indicated by the correlation unit CU2, and based on the energy state of the generator equipment 1-3, corresponding predetermined methods of intervention.

Thus, for example, if the current operating mode of the motor vehicle is drive mode (normal driving), the unit PCU is arranged to execute, for example, three different types of intervention depending on whether the state of charge SOC of the battery 3 is "low", "normal" or "high".

If the state of charge of the battery is "low", the unit PCU via the output 11 requests an increase in the rotation speed of the engine when idling and if necessary triggers a controlled reduction of absorption by the non-priority loads 5 via the associated controlled switches 7, all this aiming to reduce as far as possible the absorbed current that is dependent on the storage battery 3.

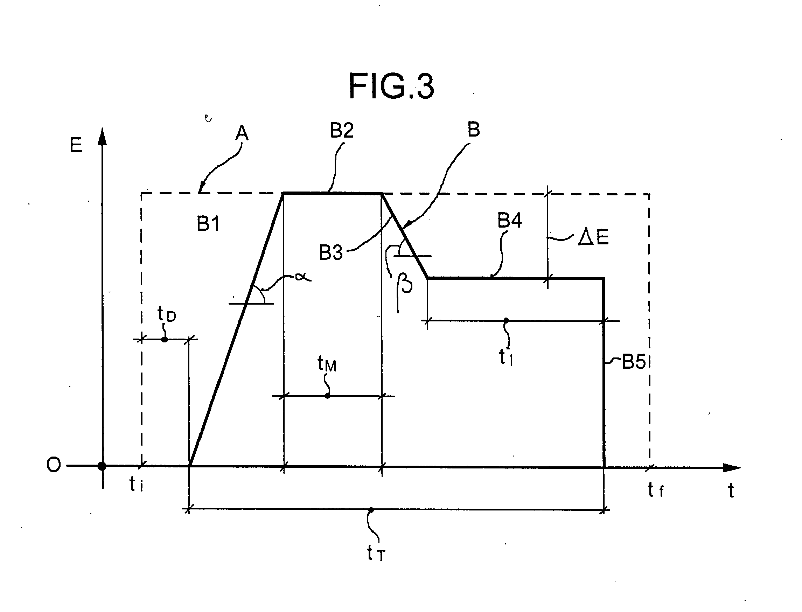

The absorption by one or more non-priority loads 5 can be reduced by means of an actual interruption of the supply of current to this or these loads, or through a reduction in the intensity of the current supplied and/or via a delayed start of the electrical supply with respect to the command issued by the user. As will be described later, energy can be supplied to non-priority loads in general according to variable patterns that vary with time, which patterns can be defined each time through specific values assigned to a plurality of parameters. This will become clearer below with the description of Figure 3.

If instead the state of charge of the battery 3 is "normal", this signifies a standard condition of operation of the motor vehicle. The unit PCU then attends to managing the generator 1 via the regulator 2 so as to reach and maintain a state of charge SOC of the battery 3 that is substantially constant and equal to a preset value. This also has the effect of preventing phenomena of overcharging of the battery.

If the state of charge SOC of the battery 3 is "high", in particular greater than the set reference value, the unit PCU controls the regulator 2 so as to maintain the battery 3 at a predefined constant voltage, if necessary causing the battery to discharge until its voltage reaches the target value.

When the state of charge of the battery is "normal" or "high", it does not generally become necessary to act so as to reduce the supply of energy to the non-priority loads 5.

Again by way of example, in the crank request operating mode, if the state of charge SOC of the battery 3 is "low", the unit PCU, through the controlled switches 7, causes non-priority loads 5 to be disconnected. If the state of charge of the battery 3 worsens, as a result of attempts to start the combustion engine, the unit PCU can in the worst case cause a reduction in the supply of energy to the priority loads 6, so as to preserve a residual starting capacity.

As mentioned previously, the control unit 10, and in particular the processing and control unit PCU contained therein, is arranged to drive the controlled switches 7 such that the energy E supplied to a non-priority load 5 exhibits a variable pattern that varies with time, for example according to the solid-line curve of Figure 3. Such a time-varying pattern can be defined using the values assigned, each time, to a plurality of energy supply control parameters, for example those which will now be described with reference to Figure 3.

In the graph of Figure 3, the substantially rectangular curve in dotted line A represents a supply of electrical energy E to a generic non-priority load, which would occur when a user (driver or passenger) initiates an activation command at an instant $t_i$, and until a deactivation command is issued at a final instant $t_f$.

In Figure 3, the solid line curve B represents instead a time-varying pattern of a supply of energy to a non-priority load, brought about by the associated controlled switch 7 controlled by the electronic control unit 10. Such a pattern provides for a rising slope B1 the start of which is delayed by a time $t_D$ with respect to the instant $t_i$ of activation of the load by the user. The rising slope B1 exhibits a gradient $\alpha$ corresponding to the rate of increase with time of the energy E supplied to the non-priority load.

The rising slope B1 is followed by a horizontal line B2, which corresponds to a supply of energy E at the maximum value, this maximum value being substantially equal to the constantly supplied value according to the curve A. The line B2 has a duration $t_M$.

After the line B2 there is a falling slope B3, the gradient $\beta$ of which corresponds to the rate of decrease with time of the energy supplied to the non-priority load between the maximum value corresponding to the line B2 and an intermediate value corresponding to the next line B4 of the pattern B. The "jump" or difference between the levels of energy supplied to the non-priority load at the start and at the end of the falling slope B3 is indicated as $\Delta E$.

Lastly, after the line B4 there is falling line B5 which is almost "vertical", that is, practically instantaneous. The duration of the line B4 is indicated as $t_I$, while the overall duration of the supply of energy according to the pattern B is indicated as $t_T$.

From the above description, it is clear that depending on the values taken by the parameters $t_D$, $\alpha$, $t_M$, $\beta$, $\Delta E$ and $t_i$ (or $t_T$) the pattern B can (in a limiting case) be brought to coincide with the pattern A, or (in the opposite limiting case) result in the load not being supplied. In general, however, the values assigned to the abovementioned parameters (or to other equivalent combinations of some of the parameters described above) are such that the pattern B delimits, with respect to the time axis t, an area less than that enclosed by the "rectangle" of the pattern A. The total of the areas included between the t axis and patterns A and B represents the energy saving achieved when the supply of a generic non-priority load 5 is controlled according to the pattern B.

Conveniently, in the processing and control unit PCU, with regard to the various possible combinations of conditions or operating modes of the motor vehicle and energy states of the generation equipment 1-3, the specific values to be assigned to the parameters described above in order to define the extent of the reduction or delay or in the worst case the interruption of the supply of energy to each non-priority load are memorized.

According to another aspect, the unit PCU can be conveniently arranged to assign to the abovementioned energy supply control parameters values that are variable according to predetermined procedures based on further predetermined quantities that are monitored, such as environmental parameters (external temperature, presence of precipitation, etc.).

According to yet another aspect, the processing and control unit PCU can be conveniently arranged to assign, to each non-priority load 5, a respective priority index P according to a predetermined function of parameters indicating on the one hand the specific energy requirements of the load, and on the other hand the degree of impact of this load on the comfort perceived by the user of the motor vehicle.

The priority index assigned to a generic load may be expressed, for example, by a relation of the type:

$$P = k_1 E_a + k_2 C$$

where $E_a$ represents the energy "weight" of the individual load, C is an index for the comfort perceived by the user in relation to the individual load, and $k_1$ and $k_2$ are predetermined multiplicative coefficients.

Under conditions in which the supply of electrical energy to one or more non-priority loads must be reduced and/or delayed or in the worst case interrupted, the control unit 10 (PCU) acts on the non-priority loads based on their values of the priority index P.

With reference to the expression set out above, the coefficient $k_2$ associated with the degree of perceived comfort C for each non-priority load may be conveniently modified ("customized") by the same user. To this end, there may be connected to the unit 10, and in particular to the unit PCU of the latter, a setting device SD enabling the user to assign a weight $k_2$ for the comfort index C to individual non-priority loads 5 according to the user's personal subjective taste.

Naturally, the principle of the invention remaining the same, the forms of embodiment and details of construction may be varied widely with respect to those described and illustrated purely by way of non-limiting example, without thereby departing from the scope of the invention as defined in the appended claims.

**Claims**

1. A system for the supply of electrical energy (E) to electrical/electronic user devices or loads (5, 6) in a motor vehicle equipped with an engine, the electrical user devices comprising predetermined non-priority user devices (5) and predetermined priority user devices (6) to which the supply of energy may and may not, respectively, be reduced and/or delayed or interrupted,
the system comprising:

an electrical generator (1) which can be driven by the motor vehicle's engine and with which there is associated a voltage regulator device (2), and
one (at least) electrical storage battery (3) connected to the generator (1) and intended to be recharged with the energy that the generator (1) produces in excess, as compared with the consumption of the abovementioned loads (5, 6), and intended to supply energy to the loads (5, 6) when the energy produced by the generator (1) is insufficient,
the system being **characterized in that** it comprises:

means (4) of management of the storage battery (3) able to control the flow of energy from the generator (1) to the battery (3),
controlled electrical switch means (7) able to selectively control the connections of the non-priority loads (5) with the generator (1) and with the battery (3),
a plurality of sensors (S1, ..., SN) able to supply signals or data indicating values or states of a plurality of operating parameters for the motor vehicle,
first correlation means (CU1) connected to at least some of the sensors (S1, ..., Sn) and arranged to generate, according to predetermined procedures, signals or data ($I_M$) able to identify the current type of journey or mission of the motor vehicle from a plurality of predefined types of journey or mission,
second correlation means (CU2) connected to at least some of the sensors (Sn+1, ..., SM) and to the first correlation means (CU1), and arranged to generate according to predetermined procedures, based on the signals or data transmitted by the sensors (Sn+1, ..., Sm) and on the current type of journey or mission ($I_M$), signals or data (M) identifying the current operating condition of the motor vehicle from a plurality of predefined operating conditions,
a detector (Sm+1) able to supply signals or data (SOC) indicating the state of charge of the battery (3), and
processing and control means (PCU) connected to the second correlation means (CU2) and to the detector (Sm+1) and arranged to generate, according to predetermined procedures based on the current operating condition (M) of the motor vehicle and on the state of charge (SOC) of the battery (3), control signals for the voltage regulator (2) associated with the generator (1), the management means (4) for the battery (3) and the controlled switch means (7), in such a way that the supply of energy to at least one non-priority electrical load (5) is capable of being reduced and/or delayed or interrupted when the motor vehicle is in a predetermined operating condition (M) and the battery (3) is in a predetermined state of charge (SOC).

2. A system according to Claim 1, in which the processing and control means (PCU) are arranged to drive the controlled switch means (7) such that the energy (E) supplied to a non-priority load (5) exhibits a variable pattern (B) that varies with time, and that can be defined using values assigned to a plurality of energy supply control parameters ($t_D$, $\alpha$, $t_M$, $\beta$, $\Delta E$, etc.) including:

- an initial delay ($t_D$) between the activation of the non-priority load (5) by the user and the actual start of the supply of electrical energy (E) to the load (5),
- the maximum value of energy (E) supplied to the non-priority load (5), and
- the time ($t_M$) over which the maximum value of energy is supplied to the non-priority load.

3. A system according to Claim 2, in which the energy supply control parameters also comprise:

- the rate of decrease (p) of energy (E) supplied to the non-priority load (5) from the abovementioned maximum value to a predetermined intermediate value, and
- the time ($t_I$) over which the intermediate value of energy is supplied to the non-priority load (5), or the total time ($t_T$) over which energy is supplied each time to the non-priority load (5).

4. A system according to either Claim 2 or Claim 3, in which the processing and control means (PCU) are arranged to assign to the abovementioned energy supply control parameters ($t_D$, $\alpha$, $t_M$, $\beta$, ...) values that are variable according to predetermined procedures, based on predetermined quantities.

5. A system according to any one of the preceding claims, in which the processing and control means (PCU) are arranged to assign to each non-priority load (5) a respective priority index (P) according to a predetermined function of a first and second parameter (E, C) indicating the energy requirements of the load (5) and the degree of impact of this load (5) on the comfort perceived by the user.

6. A system according to Claim 5, in which the second parameter (C) indicating the degree of impact of the non-priority load (5) on the comfort perceived by the user can be modified by the same user through setting means (SD) connected to the processing and control means (PCU).

# FIG.1

GEN — 1
+ —
REG — 2
4
BATTERY — 3
+ —

6 (PRIORITY LOADS)

8
7
5 (NON-PRIORITY LOADS)

SD
SI
CONTROL UNIT
SN
10
11

EP 1 777 116 A1

FIG.2

# FIG.3

EP 1 777 116 A1

**European Patent Office**

## EUROPEAN SEARCH REPORT

Application Number

EP 05 42 5732

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 208 931 B1 (SCHOETTLE RICHARD ET AL) 27 March 2001 (2001-03-27) * column 2, line 11 - column 10, line 46; figures 1-4 * | 1 | INV. B60R16/02 H02J7/14 |
| A | EP 1 286 445 A (NISSAN MOTOR COMPANY, LIMITED) 26 February 2003 (2003-02-26) * abstract * * paragraphs [0012] - [0014]; figure 1 * | | |
| A | US 6 301 528 B1 (BERTRAM TORSTEN ET AL) 9 October 2001 (2001-10-09) * the whole document * | | |
| D,A | EP 0 950 839 A (C.R.F. SOCIETA' CONSORTILE PER AZIONI; C.R.F. SOCIETA CONSORTILE PER A) 20 October 1999 (1999-10-20) * abstract * * paragraphs [0010] - [0017]; figure 1 * | | |
| A | EHSANI M ET AL: "On board power management" POWER ELECTRONICS IN TRANSPORTATION, 2004 NOVI, MI, USA OCT. 21-22, 2004, PISCATAWAY, NJ, USA,IEEE, 21 October 2004 (2004-10-21), pages 11-17, XP010770506 ISBN: 0-7803-8538-1 * page 12 - page 14 * | 12 | TECHNICAL FIELDS SEARCHED (IPC) B60R H02J |
| A | US 6 718 214 B1 (SCHOETTLE RICHARD ET AL) 6 April 2004 (2004-04-06) * abstract * * column 3, line 8 - line 41 * * column 5, line 3 - line 9 * | | |

-/--

The present search report has been drawn up for all claims

| Place of search | Date of completion of the search | Examiner |
|---|---|---|
| Munich | 10 April 2006 | Lorenzo Feijoo, S |

EPO FORM 1503 03.82 (P04C01)

**European Patent Office**

## EUROPEAN SEARCH REPORT

Application Number

EP 05 42 5732

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 39 36 638 C1 (MERCEDES-BENZ AKTIENGESELLSCHAFT, 7000 STUTTGART, DE) 14 March 1991 (1991-03-14) * page 2, line 36 - line 59; figure 1 * * page 4, line 18 - line 50; figure 2 * ----- | | |
| A | EP 0 992 400 A (VOLKSWAGEN AKTIENGESELLSCHAFT) 12 April 2000 (2000-04-12) * paragraphs [0012] - [0016]; figure 1 * ----- | | |
| A | GB 2 360 644 A (* JAGUAR CARS LIMITED) 26 September 2001 (2001-09-26) * the whole document * ----- | | |
| A | US 6 465 908 B1 (KARUPPANA SAMY V ET AL) 15 October 2002 (2002-10-15) * the whole document * ----- | | |

**TECHNICAL FIELDS SEARCHED (IPC)**

The present search report has been drawn up for all claims

| Place of search | Date of completion of the search | Examiner |
|---|---|---|
| Munich | 10 April 2006 | Lorenzo Feijoo, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5732

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2006

| Patent document cited in search report | | Publication date | Patent family member(s) | | Publication date |
|---|---|---|---|---|---|
| US 6208931 | B1 | 27-03-2001 | WO<br>DE<br>EP<br>JP | 9921261 A1<br>19745849 A1<br>0944946 A1<br>2001505847 T | 29-04-1999<br>22-04-1999<br>29-09-1999<br>08-05-2001 |
| EP 1286445 | A | 26-02-2003 | JP<br>US | 2003061400 A<br>2003036833 A1 | 28-02-2003<br>20-02-2003 |
| US 6301528 | B1 | 09-10-2001 | WO<br>DE<br>EP<br>JP | 0035714 A1<br>19857916 A1<br>1053129 A1<br>2002532319 T | 22-06-2000<br>21-06-2000<br>22-11-2000<br>02-10-2002 |
| EP 0950839 | A | 20-10-1999 | DE<br>DE<br>ES<br>IT<br>US | 69909166 D1<br>69909166 T2<br>2201591 T3<br>T0980325 A1<br>6253139 B1 | 07-08-2003<br>15-01-2004<br>16-03-2004<br>18-10-1999<br>26-06-2001 |
| US 6718214 | B1 | 06-04-2004 | WO<br>DE<br>EP<br>JP | 0035715 A1<br>19960079 A1<br>1054789 A1<br>2002532320 T | 22-06-2000<br>21-06-2000<br>29-11-2000<br>02-10-2002 |
| DE 3936638 | C1 | 14-03-1991 | NONE | | |
| EP 0992400 | A | 12-04-2000 | DE | 19844512 C1 | 14-12-2000 |
| GB 2360644 | A | 26-09-2001 | NONE | | |
| US 6465908 | B1 | 15-10-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0950839 A